(19) Europäisches Patentamt / European Patent Office / Office européen des brevets

(11) EP 3 494 579 B1

(12) # EUROPÄISCHE PATENTSCHRIFT

(45) Veröffentlichungstag und Bekanntmachung des Hinweises auf die Patenterteilung:
**26.08.2020 Patentblatt 2020/35**

(21) Anmeldenummer: **18708918.0**

(22) Anmeldetag: **14.02.2018**

(51) Int Cl.:
***G21C 17/022*** *(2006.01)* ***G21F 9/12*** *(2006.01)*
***G21F 9/00*** *(2006.01)*

(86) Internationale Anmeldenummer:
**PCT/EP2018/053649**

(87) Internationale Veröffentlichungsnummer:
**WO 2018/149862 (23.08.2018 Gazette 2018/34)**

(54) **VERFAHREN ZUM ABBAU EINER RADIONUKLIDHALTIGEN OXIDSCHICHT**

PROCESS FOR THE REMOVAL OF A RADIONUCLIDE CONTAINING OXIDE-LAYER

PROCÉDÉ DE DÉGRADATION D'UNE COUCHE D'OXYDE CONTENANT DES RADIONUCLÉIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2017 DE 102017102935**

(43) Veröffentlichungstag der Anmeldung:
**12.06.2019 Patentblatt 2019/24**

(73) Patentinhaber: **Siempelkamp NIS Ingenieurgesellschaft mbH**
**63755 Alzenau (DE)**

(72) Erfinder:
- **THOMA, Markus**
  **63867 Johannesberg (DE)**
- **RUNGE, Hartmut**
  **63755 Alzenau (DE)**
- **BECKER, Markus**
  **63801 Kleinostheim (DE)**
- **LOEB, Andreas**
  **61194 Niddatal (DE)**
- **SCHNEIDER, Laura**
  **63071 Offenbach (DE)**
- **PRÜLLAGE, Anna**
  **69221 Dossenheim (DE)**
- **NIEDER, Dietmar**
  **76187 Karlsruhe (DE)**

(74) Vertreter: **Stoffregen, Hans-Herbert**
**Patentanwalt**
**Friedrich-Ebert-Anlage 11b**
**63450 Hanau (DE)**

(56) Entgegenhaltungen:
**EP-A2- 2 083 425**
**WO-A1-2013/041595**
**WO-A1-2018/134067**
**DE-B3-102013 102 331**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 494 579 B1

## Beschreibung

Die Erfindung bezieht sich auf ein Verfahren zum Abbau einer radionuklidhaltigen Oxidschicht, insbesondere einer Oxidschicht, die auf Oberflächen metallischer Bauteile eines Kühlmittelsystems eines Kernkraftwerks abgeschieden ist. Insbesondere betrifft die Erfindung ein Verfahren zum umfassenden Abbau von Radionukliden in einem System wie im Primärsystem und/oder in Hilfssystemen in einem Kernkraftwerk unter Nutzung vorhandenen Betriebsmediums und kraftwerkseigener Betriebssysteme.

Während des Leistungsbetriebes eines Kernkraftwerkes werden bei einer Betriebstemperatur von > 180 °C auf den mediumbenetzten Innenflächen der Systeme und Komponenten oxidische Schutzschichten gebildet. Dabei werden Radionuklide mit in die Oxidmatrix eingebaut. Ziel chemischer Dekontaminationsverfahren ist es diese Oxidschicht abzubauen, um die darin eingebundenen Radionuklide entfernen zu können. Hierdurch soll erreicht werden, dass im Falle einer Revision die Strahlenbelastung des Revisionspersonals so gering wie möglich gehalten wird oder im Falle des Rückbaus unter möglichst geringer Strahlenbelastung demontiert und die Einzelteile kostengünstig entsorgt werden können.

Die oxidischen Schutzschichten gelten auf Grund ihrer Zusammensetzung und Struktur ($Fe_{0.5}Ni_{1.0}Cr_{1.5}O_4$, $NiFe_2O_4$) als chemisch nicht löslich. Durch eine vorlaufende oxidative chemische Behandlung der Oxidstruktur kann diese aufgebrochen und die schwerlösliche Oxidmatrix in leichtlösliche Metalloxide überführt werden. Dieses Aufbrechen der Oxidmatrix geschieht mittels Oxidation des dreiwertigen Chroms zu sechswertigem Chrom:

$$Fe_{0.5}Ni_{1.0}Cr_{1.5}O_4 / NiFe_2O_4 / Fe_3O_4 \rightarrow \text{Oxidation} \rightarrow CrO_4^{2-}, FeO, NiO, Fe_2O_3 \qquad \text{Gleichung (1)}$$

Als Oxidationsbehandlung hat sich weltweit die sogenannte "Permanganat-Voroxidation" entsprechend Gleichung (2) durchgesetzt, wobei folgende drei Oxidationsbehandlungen zur Verfügung stehen:

- „NP“ Oxidation = Salpetersäure + Kaliumpermanganat (nitric acid, permanganate) (s. z. B. EP-B-0 675 973)
- „AP“ Oxidation = Natriumhydroxid + Kaliumpermanganat (alkaline, permanganate)
- "HP" Oxidation = Permangansäure (s. z. B. WO-A-2007/062743)

$$\text{Mn-VII} + \text{Cr-III} \rightarrow \text{Mn-IV} + \text{Cr-VI} \qquad \text{Gleichung (2)}$$

$$2\ HMnO_4 + Cr_2O_3 + 3\ H_2O \rightarrow 2\ MnO(OH)_2 + 2\ H_2CrO_4$$

Das Mangan-Ion liegt im Permanganat in der Oxidationsstufe 7 vor und wird entsprechend Gleichung (2) zu Mangan der Oxidationsstufe 4 reduziert, zeitgleich wird das in dreiwertiger Oxidationsstufe vorliegende Chrom zur Oxidationsstufe 6 oxidiert. Für die Oxidation von 1 Mol $Cr_2O_3$ werden, unter sauren Bedingungen entsprechend Gleichung (2), 2 Mol $MnO_4^-$ benötigt.

Eine chemische Dekontamination eines gesamten Primärsystems einschließlich aller aktivitätsführenden Hilfssysteme wurde bisher nur in wenigen Kernkraftwerken durchgeführt. Weltweit wurden in den letzten Jahren an die 50 unterschiedliche Dekontaminationsverfahren entwickelt. Von all diesen Verfahren haben sich nur die Technologien durchgesetzt, die auf einer vorlaufenden Voroxidation mit Permanganaten ($MnO_4^-$) aufbauen (z. B. EP 0 071 336, EP 0 160 831 B1, EP 242 449 B1, EP 0 355 628 B1, EP 0 753 196 B1, EP 1 082 728 B1, EP 3 446 316 (Stand der Technik ‚gemäß Artikel 54(3) EPÜ)).

Zur Verfügung stehende chemische Dekontaminationsverfahren werden grundsätzlich derzeit mit folgender Verfahrens-Sequenz (= Dekont-Zyklus) durchgeführt:

Schritt I: Voroxidations-Schritt
Schritt II: Reduktions-Schritt
Schritt III: Dekontaminations-Schritt
Schritt IV: Zersetzungs-Schritt
Schritt V: Endreinigungs-Schritt.

Die Schrittfolge I bis V wird hierbei in den bekannten Verfahren drei bis sechs Mal (drei bis sechs Dekont-Zyklen) hintereinander durchgeführt.

Alle Verfahren verwenden Permanganate (Kaliumpermanganat, Permangansäure) zur Voroxidation (I) und Oxalsäure zur Reduktion (II). Unterschiede weisen die Verfahren nur im Dekontaminationsschritt (III) auf. Hier werden unterschiedliche Chemikalien und Chemikalienmischungen eingesetzt.

Die bisherigen Dekontaminationsverfahren bauen auf das zuvor erläuterte Konzept auf. Die schwerlöslichen oxidischen Schutzschichten werden im Zuge eines Voroxidationsschrittes in leichter lösliche Oxidverbindungen umgewandelt und verbleiben auf der Systemoberfläche. Während der Voroxidation erfolgt daher kaum ein Aktivitätsaustrag aus den zu dekontaminierenden Systemen. Ein Abbau der Dosisleistung findet in dieser Zeitphase einer Dekontamination bisher nicht statt.

Erst nach dem zweiten Verfahrensschritt (II) der Reduktion der Permanganate und des gebildeten Braunsteins mittels Oxalsäure sowie im Dekontaminationsschritt (III) werden die Oxide gelöst und die gelösten Kationen/Radionuklide ausgetragen und auf Ionenaustauscherharze gebunden.

Während der Voroxidation (I) bildet sich, bei allen bisher zum Einsatz gelangten Dekontaminations-Technologien Manganoxyhydrat [$MnO(OH)_2$] bzw. Braunstein ($MnO_2$), wie Gleichung (2) verdeutlicht.

Das Manganoxyhydrat/Mangandioxid ist unlöslich und scheidet sich auf der Innenoberfläche der Komponenten / Systeme ab. Mit zunehmender Manganoxyhydrat / Mangandioxid Abscheidung wird die gewünschte Oxidation der oxidischen Schutzschicht behindert. Zusätzlich verbleiben die umgewandelten Eisen und Nickeloxide ungelöst auf der Oberfläche, sodass sich die Sperrschicht auf der Oberfläche weiter verstärkt.

Am Ende des Voroxidationsschrittes liegen im zu dekontaminierenden System folgende neue, im Verfahrensschritt I eingebrachte bzw. entstandene chemische Verbindungen vor:

| | |
|---|---|
| auf der Systemoberfläche: | $MnO_2$, NiO, FeO, $Fe_2O_3$, $Fe_3O_4$ |
| in der Voroxidationslösung: | $KMnO_4$, NaOH bzw. $HNO_3$, kolloidales $MnO(OH)_2$, $H_2CrO_4$ |

Am Ende des Voroxidationsschrittes liegen demnach noch sämtliche Metalloxide einschließlich der Radionuklide im zu dekontaminierenden System vor. Das gebildete Manganoxyhydrat/Mangandioxid wurde teilweise auch in nicht oder schlecht durchströmte Systembereiche (Tote Äste) eingetragen.

Nach dem Stand der Technik erfolgt im Zuge der Oxidation der Oxidschicht kein signifikanter Abbau von Radioaktivität, also keine Dekontamination, da praktisch keine Kationen aus der Oxidschicht herausgelöst werden, welche mit Hilfe eines Kationentauschers entfernt werden könnten. Das Lösen der Oxidschicht erfolgt vielmehr in einem zweiten Verfahrensschritt mit Hilfe von Oxalsäure, dem ein Reduktionsschritt zur Reduktion überschüssiger Permangansäure sowie von Manganoxyhydrat vorgeschaltet ist. Erst nach diesen Verfahrensschritten werden Kationen durch Ionentausch aus der Reinigungslösung (Dekontaminationslösung) entfernt.

Aus der WO 2013/041595 A1 ist ein Verfahren zum Abbau einer radionuklidhaltigen Oxidschicht unter Verwendung von Permangansäure, Schwefelsäure und Oxalsäure bekannt. Die diesbezügliche Dekontaminationslösung wird einen pH-Wert $\leq 2{,}5$ eingestellt.

Eine Methansulfonsäure enthaltende wässrige Dekontaminationslösung zum Abbau einer Oxidschicht ist der DE 10 2013 102 331 B3 zu entnehmen. Der im Kreislauf strömenden Dekontaminationslösung wird in regelmäßigen Abständen Permangansäure zudosiert.

Nach der EP 2 083 425 A2 werden Brennstabbündel mittel Ultraschallablation und chemischer Oxidation gereinigt.

Aufgabe der vorliegenden Erfindung ist es, die Nachteile des Standes der Technik zu vermeiden, insbesondere eine Vereinfachung des Verfahrensablaufs zu ermöglichen. Auch soll das Freisetzen oxidischer Partikel weitgehend vermieden werden. Insbesondere soll ein schonender Abbau der Oxidschichten erfolgen. Es soll verhindert werden, dass metallisch blanke Werkstoffe unzulässig angegriffen werden.

Zur Lösung der Aufgabe ist insbesondere vorgesehen ein Verfahren zum Abbau einer radionuklidhaltigen Oxidschicht, insbesondere einer Oxidschicht, die auf Oberflächen metallischer Bauteile eines Kühlmittelsystems eines Kernkraftwerks abgeschieden ist,
umfassend zumindest die Verfahrensschritte:

- Behandeln der Oxidschicht mittels einer ein Oxidationsmittel enthaltenden und in einem Kreislauf strömenden wässrigen Lösung,
- nach Abbau des Oxidationsmittels Führen der Lösung über einen in einem Bypass des Kreislaufs angeordneten Anionentauscher und Fixieren von Anionen und Radionukliden in diesem, wobei mehrfach der Kreislauf bei geöffnetem Bypass durchströmt wird,
- Einstellen des pH-Wertes der in dem Kreislauf strömenden Lösung mittels eines Protonenlieferanten in Form einer mineralischen Säure oder Methylsulfonsäure als organische Säure und Zudosieren von Oxalsäure insbesondere

bei abgesperrtem Bypass,

- nach Abreaktion der Oxalsäure Führen der Lösung über einen in dem oder einem weiteren Bypass angeordneten Kationentauscher, wobei mehrfach der Kreislauf bei geöffnetem Bypass durchströmt wird, und wobei durch Kationenentzug freiwerdende Oxalsäure oxidativ abgebaut wird.

Dabei sieht die Erfindung insbesondere vor, dass als Protonenlieferant die mineralische Säure Schwefelsäure oder als die organische Säure Methylsulfonsäure verwendet wird.

Der oxidative Abbau der Oxalsäure wird zumindest im Bypass eingeleitet, indem dem Bypass nach dem Kationentauscher ein Oxidationsmittel wie Permangansäure und/oder Wasserstoffperoxid zudosiert wird.

Abhängig von der dem System unterlegten Säure sollte der pH-Wert im Bereich $2{,}0 \leq pH \leq 7{,}0$ eingestellt werden.

Abweichend z.B. von der der WO 2013/041595 A1 zu entnehmenden Dekontechnologie, nach der ein pH-Wert $\leq 2{,}5$ mittels Schwefelsäure eingestellt wird, kann die Dekontlösung insbesondere bei Verwendung von Methylsulfonsäure auf einen pH-Wert von vorzugsweise im Bereich von 2,8 - 4 angehoben werden. Auf diese Weise reduziert sich die erforderliche Menge an Säure und das Verfahren ist auch für den Einsatz bei weniger gegen Säurekorrosion beständigen Werkstoffen geeignet.

In Weiterbildung der Erfindung ist vorgesehen, dass als Oxidationsmittel Permangansäure oder ein Salz der Permangansäure verwendet wird.

Wird erfindungsgemäß zur Einstellung des pH-Wertes vorzugsweise Methylsulfonsäure verwendet, so können auch andere organische Säuren oder mineralische Säuren wie Schwefelsäure zum Einsatz gelangen. Vorteilhafterweise wird jedoch Methylsulfonsäure wegen ihrer geringeren Korrosivität verwendet.

Insbesondere sind als wesentliche Merkmale der Erfindung anzugeben:

- dass die Methylsulfonsäure der Erhöhung der Löslichkeit von Metallionen dient
- dass die Methylsulfonsäure zum Einstellen des pH-Wertes dient und
- dass die Oxalate über eine Bypass-Leitung einen Kationenaustauscher durchströmen, in dem die gelösten Kationen und Radionuklide fixiert werden bei gleichzeitiger Freisetzung von Oxalsäure. Diese wird sodann oxidativ abgebaut.

Insbesondere ist vorgesehen, dass zu Beginn des Verfahrensablaufs der pH-Wert durch Zudosieren der Methylsulfonsäure eingestellt wird.

pH-Werte zwischen 2 und 7, bevorzugt zwischen 2,8 und 4 sind einzustellen.

Erfindungsgemäß ist ein Verfahren zum Abbau des Aktivitätsinventars in Komponenten und Systemen vorgesehen, wobei mit einer Dekontaminationslösung die Oxidschichten der mediumbenetzten Innenflächen abgebaut werden. Dabei kann je nach Bauart des Kraftwerkes die Dekontamination mit kraftwerkseigenen Systemen ohne Hilfe von externen Dekontaminationshilfssystemen durchgeführt werden, der Aktivitätsabbau weitestgehend ohne Kationen-Ausfällungen und Freisetzung von oxidischen Partikeln stattfinden und die Metalloxide chemisch gelöst und als Kationen / Anionen zusammen mit den Nukliden (Co-60, Co-58, Mn-54 etc.) auf Ionenaustauscherharzen fixiert werden.

Entsprechend vorliegender Erfindung wird der erforderliche pH-Wert, insbesondere zwischen 2,8 und 4 durch Zugabe von Methylsulfonsäure eingestellt.

Insbesondere erfüllt Methylsulfonsäure die für den erfindungsgemäßen Dekontaminationsprozess erforderlichen Bedingungen:

- Methylsulfonsäure ist gegenüber Permanganat beständig,
- sie wird weder oxidativ zerstört noch chemisch verändert;
- Permangansäure wird durch Methylsulfonsäure nicht reduziert;
- aus den Metalloxiden anfallende Kationen bilden mit Methylsulfonsäure leicht lösliche Methylsulfonate;
- die Methylsulfonsäure erhöht die Löslichkeit von Metallionen und vermindert dadurch das Ausfällen von Metallionenkomplexen.

In Abhängigkeit von der Fe/Cr/Ni/Zn-Zusammensetzung der Schutzschicht kann, entsprechend vorliegender Erfindung, in Abhängigkeit von der eingesetzten $HMnO_4$ - Menge jeweils vorlaufend die Menge an $H_2CrO_4$ berechnet werden, die maximal in der jeweiligen Oxidativen-Phase freigesetzt werden kann.

Damit die im Kationentauscher freigesetzte Oxalsäure nicht erneut in den eigentlichen Kreislauf, wie zum Beispiel den Primärkreislauf eines Kernkraftwerkes, zurückgelangt und dort unbeabsichtigt metallisch blanke Werkstoffe angreifen kann, ist nach einem hervorzuhebenden Merkmal der Erfindung vorgesehen, dass die Oxalsäure noch innerhalb des Bypasses oxidativ abgebaut wird. Dies kann durch Zudosieren von Permangansäure oder eines anderen Oxidationsmittels (z. B. Wasserstoffperoxid) in den Bypass erfolgen. Somit werden beim Durchströmen des Kreislaufs die nicht von Oxidschichten geschützten metallischen Oberflächen beziehungsweise die bereits von Oxidschichten befreiten Oberflächen nicht unnötig von Oxalsäure angegriffen, während zum Abscheiden der Kationen die Dekontlösung

den Bypass und somit den in diesem vorhandenen Kationentauscher durchströmt. Diese Reinigung der Lösung erfolgt durch mehrfaches Durchströmen des Kationentauschers bei Aufrechterhaltung des Kreislaufbetriebs.

Während der gesamten Dekontamination, also sowohl während des oxidativen Schrittes, in dem Chrom aus den Oxidschichten gelöst wird, als auch während des schichtweisen Abbaus der Oxidschichten in Gegenwart von Oxalsäure und während des Durchströmens der Ionentauscher ist der Kreislauf stets in Betrieb. Der Bypass wird dann zugeschaltet, wenn die jeweils dosierten Mengen an Oxidationsmittel wie Permangansäure und Oxalsäure abreagiert haben. Die gelösten Ionen werden von den im Bypass vorhandenen Ionentauschern abgeschieden und fixiert. Dabei sollten in dem Bypass der Kationentauscher und der Anionentauscher abwechselnd zugeschaltet sein.

Während der Oxidativen Phase erfolgt das Oxidieren und Lösen des in der Schutzschicht ($Fe_{0.5}Ni_{1.0}Cr_{1.5}O_4$) eingebundenen $Cr_2O_3$ gemäß Gleichung 2.

Durch die Oxidation des Cr-III-Oxids unter Bildung von wasserlöslichem Chromat werden Ni-II-Oxid (NiO), Fe-III-Oxid ($Fe_2O_3$) und Zn-II-Oxid (ZnO) in der Oxidmatrix zugänglich und können später von der Oxalsäure in Lösung gebracht werden.

$$NiO + C_2H_2O_4 \rightarrow Ni(C_2O_4)aq. + H_2O \qquad \textit{Gleichung (3)}$$

$$Fe_2O_3 + 6\ C_2H_2O_4 \rightarrow 2\ [Fe(C_2O_4)_3]^{3-} + 3\ H_2O + 6H^+ \qquad \textit{Gleichung (4)}$$

$$ZnO + C_2H_2O_4 \rightarrow Zn(C_2O_4)aq. + H_2O \qquad \textit{Gleichung (5)}$$

Die vorstehend dargestellten chemischen Reaktionen (Gleichungen 3 bis 5) laufen zeitgleich ab.

Zur Beschleunigung der $HMnO_4$-Reaktion sowie der übrigen Reaktionen wird eine Prozesstemperatur von vorzugsweise 80 °C bis 120 °C eingestellt.

Entsprechend vorliegender Erfindung erfolgt die Dekontamination vorzugsweise in einem Temperaturbereich von 85 °C bis 100 °C.

Verfahrensabhängig können auch Temperaturen von z. B. bis zu 40 °C eingestellt werden, um insbesondere den Ablauf chemischer Prozesse zu beeinflussen. Unabhängig hiervon kann die den Ionentauscher durchströmende Lösung eine niedrigere Temperatur von vorzugsweise $40\ °C \leq T \leq 60\ °C$ aufweisen. Hierzu kann die Lösung zuvor einen Wärmetauscher o. ä. durchströmen.

Während der Abreaktion des Permanganats zu $MnO(OH)_2$ wird die Lösung im zu dekontaminierenden System umgewälzt. Nach der Abreaktion der Permangansäure wird die Lösung im Bypass über einen Reinigungskreislauf durch den Anionenaustauscher (AIT) geführt und das gelöste Chrom als Chromat abgeschieden.

Voraussetzung für die Einbindung des Ionenaustauschers ist, dass die Lösung weitgehend frei von $MnO_4^-$-Ionen ist.

Anschließend wird das entstandene $MnO(OH)_2$ durch Zugabe von Oxalsäure gemäß Gleichung 6 aufgelöst.

$$MnO(OH)_2 + C_2H_2O_4 + 2\ H^+ \rightarrow Mn^{2+} + 2\ CO_2 + 3\ H_2O \qquad \textit{Gleichung (6)}$$

Durch Zugabe weiterer Oxalsäure wird sodann der eigentliche Abbau der Oxidschicht eingeleitet. Nach Abreaktion der Oxalsäure wird der Bypass geöffnet, so dass die Dekontlösung durch den in dem Bypass vorhandenen Kationentauscher (KIT) strömen kann.

Während des Betriebes des Ionenaustauschers KIT werden die zwei- und dreiwertigen Kationen (Mn-II, Fe-II, Fe-III, Zn-II und Ni-II) sowie die ionischen Radionuklide (Co-58, Co-60, Mn-54 etc.) aus der Lösung entfernt. Zeitgleich werden die Methylsulfonsäure und Oxalsäure freigesetzt und stehen dem Prozess wieder zur Verfügung. Siehe Gleichungen (7) bis (10).

Freisetzung der Methylsulfonsäure und Oxalsäure

$$Mn(CH_3SO_3)_2 + H_2KIT \rightarrow 2\ CH_3SO_3H + [Mn^{2+}KIT] \qquad \textit{Gleichungen (7)}$$

$$Mn(C_2O_4) + H_2KIT \rightarrow C_2H_2O_4 + [Mn^{2+}KIT]$$

$$Ni(CH_3SO_3)_2 + H_2KIT \rightarrow 2\ CH_3SO_3H + [Ni^{2+}KIT] \qquad \textit{Gleichungen (8)}$$

$$Ni(C_2O_4) + H_2KIT \rightarrow C_2H_2O_4 + [Ni^{2+}KIT]$$

$$Fe(CH_3SO_3)_2 + H_2KIT \rightarrow 2\ CH_3SO_3H + [Fe^{2+}KIT] \qquad \textit{Gleichungen (9)}$$

$$Fe(C_2O_4) + H_2KIT \rightarrow C_2H_2O_4 + [Fe^{2+}KIT]$$

$$Fe(CH_3SO_3)_3 + H_3KIT \rightarrow 3\ CH_3SO_3H + [Fe^{3+}KIT] \qquad \textit{Gleichungen (10)}$$

$$[Fe(C_2O_4)_3]^{3-} + 2H_3KIT \rightarrow 3\ C_2H_2O_4 + [Fe^{3+}KIT]$$

Der Betrieb der Ionenaustauscher (AIT bzw. KIT), also das Durchströmen des Bypasses, sollte solange erfolgen, bis sämtliche oder im Wesentlichen sämtliche metallische Ionen und ionischen Radionuklide auf den Ionenaustauscherharzen fixiert sind.

Entsprechend der vorliegenden Erfindung wird nach erfolgter Fixierung der Ionen im Ionentauscher der Ionentauscher-Bypass geschlossen.

Danach beginnt der nächste Zyklus. Die zuvor erläuterten Verfahrensschritte werden solange wiederholt, bis kein nennenswerter weiterer Aktivitätsaustrag aus dem zu dekontaminierenden System mehr erfolgt bzw. ein gewünschter Grenzwert erreicht ist. Dabei wird die im Kreislauf strömende Lösung weiterhin auf den gewünschten pH-Wert eingestellt, insbesondere durch Zugabe von Methylsulfonsäure.

Die einzelnen Phasen sind wie folgt definiert:

- Oxidative Phase Aufbrechen der Oxidmatrix, Kreislaufbetrieb mit Methylsulfonsäure + Permangansäure
- IT-Betrieb Fixieren des gelösten $CrO_4^{2-}$ auf Ionentauscherharzen, Kreislaufbetrieb + Zuschaltung Ionentauscher-Bypass
- Oxalsäureschritt Reduktion von $MnO(OH)_2$ und Lösen der nach Voroxidation zugänglichen Metalloxide. Kreislaufbetrieb mit Methylsulfonsäure + Oxalsäure
- IT-Betrieb Fixieren der gelösten Kationen und ionischen Radionuklide auf Ionenaustauscherharzen Kreislaufbetrieb + Zuschaltung Ionenaustauscher-Bypass

Zuschaltung Ionentauscher-Bypass heißt, dass die Lösung im Bypass über den Ionentauscher fließt.

Nach dem Stand der Technik ist es üblich, nach Ablauf der Voroxidation, das überschüssige Permanganat mit Oxalsäure zu reduzieren (Schritt II) und anschließend durch eine Zugabe von weiteren Dekontaminationschemikalien den Dekontaminationsschritt (Schritt III) einzuleiten.

Zum Zeitpunkt der Reduktion (Schritt II), befinden sich bei diesen herkömmlichen Verfahren in der Lösung noch sämtliche Inhaltsstoffe des Voroxidationsschrittes (Rest-Permanganat, kolloidales $MnO(OH)_2$, Chromat und Nickel-Permanganat) sowie alle umgewandelten Metall-Oxide auf der System- bzw. Komponentenoberfläche.

Da die Metall-Ionen teilweise in gelöster Form ($MnO_4^-$, $CrO_4^{2-}$), teils auch als leichtlösliche Metalloxide (NiO, FeO) vorliegen, treten bei der Reduktion (Schritt II) in den herkömmlichen Verfahren hohe Kationengehalte in der Lösung auf.

Zeitgleich entstehen durch die Reduktion des Permanganats, des Chromats und des Braunsteins mit der Oxalsäure große Mengen an $CO_2$ (s. Gleichungen (11 bis 13). Diese an der Oberfläche ablaufende $CO_2$-Bildung führt zu einer Mobilisierung von Oxidpartikeln, die sich dann in strömungsarmen Zonen des Systems absetzen und dort zu einer Erhöhung der Dosisleistung führen können.

$$2\ HMnO_4 + 7\ C_2H_2O_4 \rightarrow 2\ MnC_2O_4 + 10\ CO_2 + 8\ H_{2O} \qquad \textit{Gleichung (11)}$$

$$MnO_2 + 2\ C_2H_2O_4 \rightarrow MnC_2O_4 + 2\ CO_2 + 2\ H_2O \qquad \textit{Gleichung (12)}$$

$$Cr_4^{2-} + 3\ C_2H_2O_4 + 2\ (H_3O)^+ \rightarrow Cr^{3+} + 6CO_2 + 6H_2O \qquad \textit{Gleichung (13)}$$

Da bei der vorliegenden Erfindung zum Zeitpunkt der Reduktion bereits kaum Permanganat und Chromat mehr in der Lösung vorliegen, sondern lediglich $MnO(OH)_2$, und zudem in deutlich geringeren Konzentrationsbereichen gearbeitet wird, ist die vorstehend beschriebene Bildung von $CO_2$ deutlich geringer und eine Freisetzung von Oxidpartikeln durch Abplatzungen wird weitgehend vermieden. Die Oxalat-Verbindungen, die aus zweiwertigen Kationen und der Reduktionschemikalie Oxalsäure gebildet werden, haben nur eine begrenzte Löslichkeit in Wasser. Je nach der Verfahrenstemperatur liegt die Löslichkeit der zweiwertigen Kationen bei:

| | 50°C | 80°C | Einheit |
|---|---|---|---|
| $NiC_2O_4$ | ca. 3 | ca.6 | mg Ni-II/ Liter |
| $FeC_2O_4$ | ca.15 | ca. 45 | mg Fe-II/Liter |
| $MnC_2O_4$ | ca.120 | ca.170 | mg Mn-II/Liter |

Rechnerisch werden bei einer Primärsystemdekontamination bei Einsatz der bisherigen Dekontaminationsverfahren pro Dekontaminationszyklus große Kationenmengen freigesetzt. Dies führt bereits im Reduktions-Schritt zu Oxalat-Ausfällungen auf den Innenflächen der Systeme.

Die oxidischen Schutzschichten eines Primärsystems eines Druckwasser-Kernkraftwerkes ergeben üblicherweise in Summe ein Gesamtoxidinventar von ca. 500 kg [Fe-, Cr-, Ni-Oxid].

Bei der Dekontamination eines Primärsystems eines Druckwasserreaktors muss daher mit folgender maximaler Kationenfreisetzung gerechnet werden:

Chrom → 70 bis 80 kg Cr

Nickel → 100 bis 120 kg Ni

Eisen → 190 bis 210 kg Fe

Bei der Primärsystemdekontamination werden üblicherweise 3 Dekontaminationszyklen durchgeführt. Bei einem Gesamtvolumen von ca. 600 $m^3$ und einer gleichmäßigen Verteilung der Kationen über 3 Zyklen ist pro Zyklus mit folgenden Konzentrationen an zweiwertigen Kationen zu rechnen:

Nickel → 67 ppm Ni

Eisen → 117 ppm Fe

Diese Überschlagsrechnung zeigt auf, dass bei allen bisherigen Dekontaminationsverfahren, die zur Reduktion und/oder Dekontamination große Mengen Oxalsäure einsetzten, eine Ausfällung von $Fe^{2+}$- und $Ni^{2+}$-Oxalat nicht vermieden werden kann.

Liegen, wie zuvor beschrieben, nach Beendigung eines Dekontaminationszyklus diese Oxalat-Reste noch im System vor, muss im darauffolgenden Zyklus mehr Permanganat eingesetzt werden, wie die Gleichungen (14 + 15) zeigen:

$$3\ NiC_2O_4 + 2\ HMnO_4 + H_2O \rightarrow 3\ NiO + 2\ MnO(OH)_2 + 6\ CO_2$$ *Gleichung (14)*

$$2\ FeC_2O_4 + 2\ HMnO_4 + H_2O \rightarrow Fe_2O_3O + 2\ MnO(OH)_2 + 4\ CO_2$$ *Gleichung (15)*

Dies führt, ohne dass das Dekontaminationsergebnis verbessert wird, zu einem höheren Permanganatbedarf und daraus resultierend letztendlich zu einem höheren Anfall an radioaktiven Abfall. Die bereits gelösten Radionuklide (Co-58, Co-60, Mn-54) werden in die Oxalat-Schicht mit eingebunden. Dies führt zu einer Rekontamination in den Systemen.

Bei der vorliegenden Erfindung wird mit deutlich geringeren Konzentrationen an Permangansäure und Oxalsäure gearbeitet und das auszutragende Oxidinventar auf deutlich mehr Dekontaminationszyklen verteilt. Daher wird die Löslichkeitsgrenze pro Zyklus nicht überschritten und es kommt folglich nicht zu Oxalat-Ausfällungen.

Die zuvor aufgezeigten Detailschritte können je nach Art und Menge des im System vorliegenden Oxid- /Aktivitätsinventars beliebig wiederholt werden.

Eine Dekontamination, entsprechend der vorliegenden Erfindung, benötigt im Vergleich zu den bisherigen Verfahrenstechniken eine sehr niedrige Chemikalien-Konzentration pro Zyklus. Die benötigten Chemikalien-Mengen können daher mit in Kernkraftwerken vorhandenen eigenen Dosiersystemen dosiert und die anfallenden Kationen je nach Bauart des Kraftwerks mittels KKW-eigenen Reinigungssystemen (Ionenaustauscher) entfernt werden. Große externe Dekontaminationseinrichtungen müssen nicht zwangsläufig installiert werden.

Durch Betrieb des Reaktorprimärsystems und aller für die Dekontamination erforderlicher Reaktor-Nebensysteme von der Kraftwerkswarte aus durch den Betreiber der Kraftwerksanlage und durch Erfassung aller für den Dekontaminationsprozess erforderlicher Daten über ein separates Datenerfassungs- und Auswertesystem des mit der Dekontamination Beauftragten können die Prozessparameter den jeweiligen neuen Anforderungen angepasst werden (Chemikaliendosierung, Chemikalienkonzentrationen, Prozesstemperatur, Zeitpunkt der Ionentauscher-Einbindung, Schrittfolgen etc.).

Die Prozess-Datenverarbeitung und die Prozess-Steuerung sind, da das beschriebene Dekontaminationsverfahren ohne eine separate Dekontaminationsanlage auskommt, außerhalb des Kontrollbereiches installiert. Hierdurch entsteht für das Personal der Prozesssteuerung keine Strahlenbelastung während der Durchführung der Dekontamination.

In hervorzuhebender eigenständiger Weiterbildung ist vorgesehen, dass der Kreislauf mehrere Abschnitte umfasst, dass jeder Abschnitt eine Fördereinrichtung enthält und dass zum Fördern der Dekontaminationslösung zumindest in einem der Abschnitte die in dieser angeordneten Fördereinrichtung abgeschaltet wird. Vorzugsweise werden die Fördereinrichtungen von zwei Abschnitten abgeschaltet.

Die Verfahrensvariationen können bei Bedarf solange durchgeführt werden, bis der gewünschte Aktivitätsaustrag bzw. die gewünschte Dosisleistungsreduktion erzielt wurde. Am Ende der Gesamtdekontaminations-Durchführung wird die Methylsulfonsäure im Zuge der Endreinigung auf Ionenaustauscherharze gebunden.

Weitere Einzelheiten, Vorteile und Merkmale der Erfindung ergeben sich aus der nachfolgenden Beschreibung der Erfindung, die anhand einer Prinzipdarstellung eines Dekontaminationskreislaufs erläutert wird.

In der einzigen Fig. wird in Prinzipdarstellung ein Kreislauf 10 - auch Primärkreislauf genannt - eines Primärsystems eines Druckwasserreaktors dargestellt. In dem Kreislauf 10 befinden sich ein Reaktordruckgefäß 12 und im Ausführungsbeispiel vier Dampferzeuger 14, 16, 18, 20. Die Dampferzeuger 14, 16, 18, 20 sind in Abschnitten 22, 24, 26, 28 - auch Hauptkühlmittelkreise genannt - des Kreislaufs 10 angeordnet, die von dem Reaktordruckgefäß 12 ausgehen. In jedem Abschnitt 22, 24, 26, 28 ist eine Hauptkühlmittelpumpe 30, 32, 34, 36 angeordnet.

Der Kreislauf 10 ist der sogenannte Dekontaminations-Kreislauf - kurz gesprochen Dekont-Kreislauf. Der Kreislauf 10 ist mit einem Volumenausgleichskreis 38 verbunden, der einen Volumenausgleichsbehälter 40 beinhaltet, durch den sichergestellt ist, dass im Kreislauf 10 die erforderliche Menge an Dekont-Medium vorhanden ist. Insoweit ist jedoch auf bekannte Techniken in Kernkraftwerken zu verweisen. Von dem Volumenausgleichskreis 38, der ein Bypass des Primärkreislaufs ist, geht ein Bypass 42 aus. In dem Bypass 42 sind ein Anionentauscher (AIT) 44 und ein Kationentauscher (KIT) 46 angeordnet, die parallel geschaltet sind, damit wahlweise über einen der Ionentauscher 44, 46 die wässrige Lösung des Kreislaufs 10 strömen kann.

Anstelle von zwei Ionentauschern besteht selbstverständlich auch die Möglichkeit, dass ein Ionentauscher mit einer Mischung aus Anionen-Harzen und Kationen-Harzen verwendet wird. Insoweit handelt es sich hierbei um äquivalente Maßnahmen.

Zum Durchströmen bzw. Sperren der Ionentauscher 44, 46 sind Absperrventile 48, 50 vorhanden, über die folglich auch der Bypass 42 absperrbar bzw. freigebbar ist.

Stromabwärts der Ionentauscher 44, 46 ist eine mit dem Bypass 42 verbundenen Chemikalieneinspeisung 52 vorgesehen, über die ein Oxidationsmittel zudosiert werden kann.

In dem Kreislauf 10 sind auf den metallischen Innenflächen von Systemen und Komponenten insbesondere Chrom, Eisen, Nickel, Zink und Radionuklide enthaltene Oxidschichten abgeschieden, die mittels einer wässrigen Dekontaminationslösung abgebaut werden, die in dem Kreislauf 10 strömt. Hierzu wird über eine Chemikalieneinspeisung 52 dem Kreislauf 10 zunächst Permangansäure in einer Konzentration vorzugsweise zwischen 40 und 70 ppm zugeführt. Ferner ist der pH-Wert der Lösung durch Zugabe von Methylsulfonsäure auf einen Wert zwischen 2,8 und 4 einzustellen. Durch die Permangansäure wird eine oxidative Phase eingeleitet, um den unlöslichen FeCrNi-Oxidverband in leichtlösliche Metalloxide umzuwandeln. Das Cr-III-Oxid wird zu Cr-VI oxidiert und liegt in der Lösung als Chromsäure vor. Nachdem das Permanganat vollständig oder im Wesentlichen vollständig in der in dem Kreislauf 10 strömenden wässrigen Lösung abreagiert hat und die Lösung im Wesentlichen frei von $MnO^{-}_{4}$-Ionen ist, wird das Absperrventil 50 geöffnet, damit die wässrige Lösung den Anionentauscher 44 in dem Bypass 42 durchströmt, in dem das Chromat abgeschieden wird. Nach mehrfachem Durchströmen des Anionentauscher 44 - hierzu durchströmt die Lösung den Kreislauf 10, den Bypass 38 und den Bypass 42 - wird das Absperrventil 50 geschlossen und dem Kreislauf 10 bzw. der in dieser strömenden wässrigen Lösung im erforderlichem Umfang Methylsulfonsäure zudosiert, damit die gewünschte Konzentration, vorzugsweise zwischen 50 ppm und 100 ppm, herrscht und somit der gewünschte pH-Wert insbesondere im Bereich zwischen 2,8 und 4 liegt. Sodann wird Oxalsäure zugegeben, und zwar in einer Konzentration zwischen 100 ppm und 150 ppm in der Lösung. Durch die Dosierung von Oxalsäure werden das vorliegende $MnO(OH)_2$ zu löslichem $Mn^{2+}$ reduziert sowie die Metalloxide der Oxidschichten schichtweise abgebaut und in Lösung gebracht. Hierzu durchströmt die wässrige Lösung den Kreislauf 10 mehrfach.

Nach Lösen der Oxidschichten wird der Bypass 42, d. h. das Absperrventil 48 geöffnet, damit die Lösung über den Kationentauscher 46 strömt, wobei die gelösten Kationen und ionischen Radionuklide fixiert werden. Im Zuge des Kationentauscherbetriebs werden Methylsulfonsäure und Oxalsäure wieder frei. Damit die Oxalsäure oxidativ abgebaut werden kann, wird über die Einspeisung 52 z. B. Permangansäure oder $H_2O_2$ zugeführt. Somit kann vermieden werden, dass die metallisch blanken Komponenten und Einbauten im Kreislauf 10 durch die regenerierte Oxalsäure unzulässig angegriffen werden. Die Oxalsäure wird dann zu $CO_2$ zersetzt.

Erfindungsgemäß erfolgt in der oxidativen Phase chemisch eine Umwandlung der schwer löslichen Fe-, Cr-, Ni-Struktur in leichter lösliche Oxidformen mittels Permangansäure. Das Lösen der umgewandelten Oxidformen erfolgt mit Oxalsäure. Verfahrenstechnisch wird dies in dem Kreislauf 10 durchgeführt, in dem der pH-Wert mittels Methylsulfonsäure eingestellt wird.

Nacheinander werden Permangansäure und Oxalsäure zudosiert, wobei der Bypass 42 stets dann geöffnet wird, wenn die Permangansäure vollständig oder nahezu vollständig abgebaut bzw. die Oxalsäure abreagiert ist. Dabei komplexiert die Oxalsäure, d. h. Oxalsäure bildet mit den Metallionen Komplexe. Nach Abbau der Permangansäure wird die Lösung bei Aufrechterhaltung der Strömung durch den Kreislauf 10 durch den Anionentauscher 44 und nach Abreaktion der Oxalsäure durch den Kationentauscher 46 geleitet, um die Ionen und Radionuklide zu fixieren. Die regenerierte Methylsulfonsäure steht dem Kreislauf 10 wieder zur Verfügung. Die regenerierte Oxalsäure wird oxidativ abgebaut. Unabhängig hiervon erfolgt im erforderlichen Umfang ein Nachdosieren von Methylsulfonsäure, damit die Lösung auf den gewünschten pH-Wert eingestellt ist.

In jedem der Abschnitte 22, 24, 26, 28 des Kreislaufes 10 befinden sich eine Pumpe 30, 32, 34, 36. Erfindungsgemäß ist es nicht erforderlich, dass in jedem Abschnitt 22, 24, 26, 28 die Pumpe in Betrieb ist. Vielmehr kann in einigen der Abschnitte 22, 24, 26, 28 die vorhandene Pumpe vollständig abgeschaltet werden, d.h. diese läuft nicht mehr aktiv, sondern nur noch passiv aufgrund der durch diese strömende Lösung. Ungeachtet dessen strömt jedoch durch sämtliche Abschnitte 22, 24, 26, 28 die Lösung, und zwar aufgrund der Druckdifferenz, die durch die Förderung der Lösung in den Abschnitten erfolgt, in denen die Pumpe in Betrieb ist. Im Ausführungsbeispiel können z. B. die Pumpen 30, 32 abgeschaltet sein, d. h. in den Abschnitten 22, 24 findet keine aktive Förderung der Lösung statt. Die Pumpen 34, 36 in den Abschnitten 26, 28 sind demgegenüber im Betrieb.

Ferner sollte die Dosierung der Chemikalien möglichst über einen nicht aktiv gepumpten Abschnitt erfolgen, also im Ausführungsbeispiel in dem Abschnitt 22 und/oder 24.

Nachstehend sollen noch einmal Merkmale aufgelistet werden, die für sich oder in Kombination die erfindungsgemäße Lehre kennzeichnen.

Die Erfindung zeichnet sich dadurch aus, dass nur eine geringe Chemikalienkonzentration zum Einsatz gelangt, auch bzgl. der Unterlegung mit der Methylsulfonsäure, um den pH-Wert einzustellen. Hierdurch wird das Abplatzen aus der Oxidschicht vermieden und die Löslichkeit von oxidischen Metall-Komplexen verbessert.

Bevorzugte Chemikalienkonzentrationen für sich oder in Kombination sind:

Permangansäure: 40 ppm bis 70 ppm
Oxalsäure 100 ppm bis 150 ppm
Methylsulfonsäure 50 ppm bis 100 ppm

Das auszutragende Oxidinventar wird typischerweise auf $\geq$ 10 Dekontaminationszyklen verteilt
Es kann die Strömungsgeschwindigkeit im Primärkreislauf insbesondere im Reaktordruckbehälter des Reaktorsystems z. B. durch den nicht gleichzeitigen Betrieb aller Hauptkühlmittelpumpen reduziert werden. Der Abtrag an metallisch blanken Oberflächen oder stark aktivierten Kerneinbauten kann durch diese Fahrweise minimiert werden.

Vorzugsweise sollte der pH-Wert zwischen 2,8 und 4 eingehalten werden. Dieser Wert wird im Wesentlichen durch die Methylsulfonsäure, jedoch nicht ausschließlich durch diese bestimmt, sondern u. a. auch von anderen anwesenden Säuren sowie vom Beladezustand des Anionentauschers mit Methylsulfonsäure. Dies ist bei der Einstellung des pH-Wertes und seiner Nachjustierung während des Prozesses zu beachten.

Beim Einsatz der Methylsulfonsäure ist Folgendes zu bemerken. Die Zugabe der Methylsulfonsäure erfolgt zunächst vor Beginn der FSD (Full system dekontamination) in zwei Teilschritten:

- Im ersten Schritt wird eine Teilmenge der voraussichtlich benötigten Menge Methylsulfonsäure dosiert, um aus der sich im System ergebenden und gemessenen Konzentration das tatsächliche Gesamtvolumen des Dekontaminationssystems zu ermitteln. Dies ist für die Dosierung der übrigen Chemikalien von Bedeutung. Im zweiten Teilschritt wird dann die Restmenge Methylsulfonsäure bis zum Erreichen von pH zwischen 2,8 und 4 durchgeführt.
- Während der FSD hängt der pH-Wert außer von den periodisch dosierten anderen Chemikalien auch wesentlich von der Beladung des Anionentauschers mit Methylsulfonsäure ab. Im Anionentauscher-Reinigungsbetrieb verdrängt das abzuscheidende Chromat Methylsulfonat vom Anionentauscher, das sich als Methylsulfonsäure anschließend wieder im Systemvolumen auf den pH-Wert auswirkt. Dieses Wechselspiel ist beim pH-Management zu beachten.
- Eine Nachdosierung von Methylsulfonsäure erfolgt bevorzugt nach einem Anionentauscher-Reinigungsschritt, kann aber auch zu anderen Zeitpunkten durchgeführt werden, z. B. nach einem Wechsel der Anionentauscher-Harze.

Weitere kennzeichnende Merkmale der Erfindung sind Folgende, isoliert oder in Kombination:

- Grundsätzlich bewirkt der Einsatz von Methylsulfonsäure eine verbesserte Auflösung von Cr(III)-Oxid und Schwermetallsalzen wie z. B. des Nickels in Form von Nickel(II)-Methylsulfonat und ermöglicht dadurch eine Verringerung der Oxalsäure-Menge und damit auch der Gefahr von Oxidabplatzungen als Folge des Oxalsäure-Einsatzes.

- Durch die Möglichkeit, nur geringe Mengen Oxalsäure einsetzen zu können, reduziert sich auch der unerwünschte Materialabtrag an metallisch blanken Oberflächen, z. B. an Oberflächen, die von vornherein wegen ehemals niedriger Betriebstemperatur keine Oxidschichten ausgebildet haben oder bei denen oxidische Schutzschichten aufgrund der Werkstoffzusammensetzung nur schwach ausgebildet sind (z.B. Chromstähle).

- Das mit einer Unterlegung von Methylsulfonsäure betriebene Dekontaminationsverfahren kann in den Reinigungsschritten sowohl mit getrennten Anionentauscher-Harzen und Kationentauscher-Harzen als auch mit einer Mischung aus Anionen-Harzen und Kationen-Harzen betrieben werden. Vorzugsweise werden zwei getrennte Filter mit jeweils einer reinen Füllung aus Anionentauscher-Harzen bzw. Kationentauscher-Harzen betrieben. Die getrennte Fahrweise ermöglicht eine vereinfachte chemische Prozesskontrolle und eine bessere Ausnutzung der Harzkapazität und reduziert somit das Abfallvolumen. Insbesondere bei Beladung der Harzfilter mit getrennter Anionentauscher-Harz / Kationenlauscher-Harz-Füllung kann es bei einem auf Methylsulfonsäure-Unterlegung basierenden Prozess vorteilhaft sein, den Anionentauscher-Filter vor Beginn des Dekontaminationsprozesses mit Methylsulfonsäure vorzubeladen. Der Anionentauscher-Filter wirkt in diesem Fall als Reservoir für die Methylsulfonsäure, indem im Anionentauscher-Reinigungsbetrieb im Kreislauf in Lösung gebrachtes Chromat aus dem Oxidationsschritt auf dem Anionentauscher-Harz gebunden wird und dabei die Methylsulfonsäure verdrängt bzw. wieder in den Kreislauf freisetzt. Wird umgekehrt keine Vorbeladung des Anoinentauscher-Harzes durchgeführt, so wird während des Anionentauscher-Reinigungsbetriebes Methylsulfonsäure bis zu einem bestimmten Grade dem Kreislauf entzogen. Die Betriebsweisen mit Vorbeladung des Anionentauschers oder ohne Vorbeladung des Anionentauschers bzw. auch eine Teilbeladung des Anionentauschers mit Methylsulfonsäure können zur Steuerung des pH-Wertes im Kreislauf bzw. zur Regulierung der Methylsulfonsäurekonzentration herangezogen werden.

Bei dem beschriebenen Dekontaminationsverfahren mit Unterlegung der Prozesschemie mit Methylsulfonsäure kann die Zerstörung der im Kationentauscher-Reinigungsbetrieb aus dem Kationentauscher wieder in den Bypass bzw. in den Kreislauf freigesetzten Oxalsäure durch die Dosierung von Wasserstoffperoxid anstelle von Permangansäure durchgeführt werden. Die Zerstörung der Oxalsäure durch Wasserstoff-Peroxid gelingt in der auf einer Unterlegung mit Methylsulfonsäure basierenden Prozesschemie ohne zusätzlichen Einsatz von der in den bekannten Dekontaminationsverfahren erforderlichen Energiezufuhr durch Einstrahlung von UV-Licht. Die Zersetzung der Oxalsäure zu Kohlendioxid und Wasser wird gegenüber den bekannten, auf UV-Einstrahlung basierenden Verfahren, erheblich vereinfacht. Insbesondere ist zur Zerstörung der Oxalsäure kein zusätzliches, externes Equipment erforderlich. Gegenüber der Zerstörung der Oxalsäure mit Permangansäure, die ggf. auch additiv zum Wasserstoff-Peroxid eingesetzt werden kann, wird das zusätzliche Abfallvolumen, das bei ausschließlicher Zerstörung der Oxalsäure mit Permangansäure entsteht, vollständig vermieden oder bei einer Mischdosierung von Permangansäure und Wasserstoff-Peroxid signifikant reduziert.

## Patentansprüche

1. Verfahren zum Abbau einer radionuklidhaltigen Oxidschicht, insbesondere einer Oxidschicht, die auf Oberflächen metallischer Bauteile eines Kühlmittelsystems eines Kernkraftwerks abgeschieden ist, umfassend zumindest die Verfahrensschritte:

   - Behandeln der Oxidschicht mittels einer ein Oxidationsmittel enthaltenden und in einem Kreislauf (10, 22, 24, 26, 28) strömenden wässrigen Lösung,
   - nach Abbau des Oxidationsmittels Führen der Lösung über einen in einem Bypass (42) des Kreislaufs angeordneten Anionentauscher (44) und Fixieren von Anionen und Radionukliden in diesem, wobei mehrfach der Kreislauf bei geöffnetem Bypass durchströmt wird,
   - Einstellen des pH-Wertes der in dem Kreislauf strömenden Lösung mittels eines Protonenlieferanten in Form einer mineralischen Säure oder von Methylsulfonsäure als organische Säure und Zudosieren von Oxalsäure bei abgesperrtem Bypass,
   - nach Abreaktion der Oxalsäure Führen der Lösung über einen in dem oder einem weiteren Bypass angeordneten Kationentauscher (46), wobei mehrfach der Kreislauf bei geöffnetem Bypass durchströmt wird,
   - oxidativer Abbau von durch Kationenentzug freiwerdender Oxalsäure.

2. Verfahren nach Anspruch 1,
**dadurch gekennzeichnet,**
**dass** als die mineralische Säure Schwefelsäure oder als die organische Säure Methylsulfonsäure verwendet wird.

3. Verfahren nach Anspruch 1 oder 2,
**dadurch gekennzeichnet,**
**dass** der pH-Wert eingestellt wird auf $2 \leq pH \leq 7{,}0$, insbesondere $2{,}8 \leq pH \leq 4$.

4. Verfahren nach zumindest einem der vorhergehenden Ansprüche,
**dadurch gekennzeichnet,**
**dass** als Oxidationsmittel Permangansäure oder ein Salz der Permangansäure verwendet wird.

5. Verfahren nach zumindest einem der vorhergehenden Ansprüche,
**dadurch gekennzeichnet,**
**dass** in der wässrigen Lösung eine Methylsulfonsäurekonzentration von ≤ 500 ppm, vorzugsweise zwischen 50 ppm und 100 ppm eingestellt wird.

6. Verfahren nach zumindest einem der vorhergehenden Ansprüche,
**dadurch gekennzeichnet,**
**dass** durch Entzug von Mn-II- und/oder Zn-II- und/oder Fe-II- und/oder Fe-III- und/oder Ni-II-Ionen mittels Ionentauscherharzes in dem Kationentauscher zumindest die Oxalsäure regeneriert wird.

7. Verfahren nach zumindest einem der vorhergehenden Ansprüche,
**dadurch gekennzeichnet,**
**dass** die Permangansäure zu Beginn des Behandelns der Oxidschicht auf eine maximale Konzentration von 200 ppm, vorzugsweise ≤ 50 ppm eingestellt wird.

8. Verfahren nach zumindest einem der vorhergehenden Ansprüche,
**dadurch gekennzeichnet,**
**dass** die Permangansäure auf eine Konzentration von 40 - 70 ppm eingestellt wird.

9. Verfahren nach zumindest einem der vorhergehenden Ansprüche,
**dadurch gekennzeichnet,**
**dass** zumindest während des Behandelns der Oxidschicht mit dem Oxidationsmittel die wässrige Lösung im Bereich der Oxidschichten auf eine Temperatur zwischen 80 °C und 120 °C, insbesondere zwischen 85 °C und 100 °C, eingestellt wird.

10. Verfahren nach zumindest einem der vorhergehenden Ansprüche,
**dadurch gekennzeichnet,**
**dass** die wässrige Lösung im Bereich der Oxidschichten bei vorhandener Oxalsäure auf eine Temperatur zwischen 40 °C und 120 °C, insbesondere auf eine Temperatur zwischen 85 °C und 100 °C, eingestellt wird.

11. Verfahren nach zumindest einem der vorhergehenden Ansprüche, wobei die Oxidschicht auf Innenflächen eines Kühlmittelkreislaufes (22, 24, 26, 28) eines Kernkraftwerks oder dessen Komponenten abgeschieden ist,
**dadurch gekennzeichnet,**
**dass** nach vollständigem Verbrauch des Oxidationsmittels bei Aufrechterhalten des Kreislaufbetriebs die wässrige Lösung über den Bypass (42) durch den Anionentauscher (44) zum Binden zumindest von in der Lösung vorliegendem Chromat geführt wird, dass nach mehrfachem Durchströmen durch den mit dem offenen Bypass verbundenen Kreislauf der Bypass geschlossen und sodann Oxalsäure der wässrigen Lösung zugeführt wird, dass durch die Oxalsäure schichtweise Metalloxide gelöst werden, dass nach Abreaktion der Oxalsäure die wässrige Lösung bei Aufrechterhalten des Kreislaufbetriebs über den Bypass geführt wird und in dem Kationentauscher (46) von in der Lösung befindlichen Fe- und/oder Ni- und/oder Zn- und/oder Mn-Kationen und Radionukliden gebunden werden, dass in dem Bypass durch Kationenentzug freigestellte Oxalsäure im Bypass zumindest teilweise oxidativ abgebaut wird, und dass die entsprechenden Verfahrensschritte in einem Umfang wiederholt werden, bis ein vorgegebener Dekontaminationsgrad erreicht ist.

12. Verfahren nach zumindest einem der vorhergehenden Ansprüche,
**dadurch gekennzeichnet,**

**dass** der Kreislauf (10) mehrere Abschnitte (22, 24, 26, 28) umfasst, dass jeder Abschnitt eine zumindest eine Pumpe (30, 32, 34, 36) umfassende Fördereinrichtung enthält und dass zum Fördern der Dekontaminationslösung zumindest in einem der Abschnitte, vorzugsweise in zwei Abschnitten, die in dieser angeordneten Fördereinrichtung verwendet wird.

**13.** Verfahren nach zumindest einem der vorhergehenden Ansprüche,
**dadurch gekennzeichnet,**
**dass** erforderliche Chemikalien in einen Abschnitt (22, 24, 26, 28) zudosiert werden, in dem die Fördereinrichtung (30, 32, 34, 36) abgeschaltet ist.

**Claims**

**1.** Method for removal of a radionuclide-containing oxide layer, in particular of an oxide layer deposited onto surfaces of metallic components of a coolant system of a nuclear power station,
comprising at least the method steps:

- treatment of the oxide layer by means of an aqueous solution containing an oxidizing agent and flowing in a circuit (10, 22, 24, 26, 28),
- after removal of the oxidizing agent, routing of the solution via an anion exchanger (44) arranged in a bypass (42) of the circuit and fixing of anions and radionuclides therein, the circuit being flowed through multiple times when the bypass is open,
- setting of the pH value of the solution flowing in the circuit by means of a proton supplier in the form of a mineral acid or methyl sulfonic acid as an organic acid, and metering of oxalic acid when the bypass is shut off,
- after reaction of the oxalic acid, routing of the solution via a cation exchanger (46) arranged in said bypass or a further bypass, the circuit being flowed through multiple times when the bypass is open,
- oxidative removal of oxalic acid released by cation extraction.

**2.** Method according to claim 1,
wherein
sulfuric acid is used as the mineral acid or methyl sulfonic acid as the organic acid.

**3.** Method according to claim 1 or 2,
wherein
the pH value is set to $2 \leq pH \leq 7.0$, in particular to $2.8 \leq pH \leq 4$.

**4.** Method according to at least one of the preceding claims,
wherein
permanganic acid or a salt of the permanganic acid is used as the oxidizing agent.

**5.** Method according to at least one of the preceding claims,
wherein
a methyl sulfonic acid concentration of $\leq$ 500 ppm, preferably between 50 ppm and 100 ppm, is set in the aqueous solution.

**6.** Method according to at least one of the preceding claims,
wherein
at least the oxalic acid is regenerated in the cation exchanger by extraction of Mn-II and/or Zn-II and/or Fe-II and/or Fe-III and/or Ni-II ions by means of ion exchange resin.

**7.** Method according to at least one of the preceding claims,
wherein
the permanganic acid is set at the start of the treatment of the oxide layer to a maximum concentration of 200 ppm, preferably $\leq$ 50 ppm.

**8.** Method according to at least one of the preceding claims,
wherein
the permanganic acid is set to a concentration of 40 - 70 ppm.

9. Method according to at least one of the preceding claims, wherein the aqueous solution in the area of the oxide layers is set at least during the treatment of the oxide layer with the oxidizing agent to a temperature between 80 °C and 120 °C, in particular between 85 °C and 100 °C.

10. Method according to at least one of the preceding claims, wherein the aqueous solution in the area of the oxide layers is, when oxalic acid is present, set to a temperature between 40 °C and 120 °C, in particular to a temperature between 85 °C and 100 °C.

11. Method according to at least one of the preceding claims, the oxide layer being deposited onto inner surfaces of a coolant circuit (22, 24, 26, 28) of a nuclear power station or its components, wherein after complete consumption of the oxidizing agent, the aqueous solution is, while maintaining the circuit operation, routed via the bypass (42) through the anion exchanger (44) to bind at least the chromate present in the solution; after multiple flows through the circuit connected to the open bypass, said bypass is closed and oxalic acid is then supplied to the aqueous solution; metal oxides are released layer for layer by the oxalic acid; after reaction of the oxalic acid the aqueous solution is, while maintaining the circuit operation, routed via the bypass and is bound in the cation exchanger (46) by Fe and/or Ni and/or Zn and/or Mn cations and radionuclides present in the solution; oxalic acid released by cation extraction in the bypass is at least partially oxidatively removed in said bypass; and the corresponding method steps are repeated to an extent that a specified degree of decontamination is achieved.

12. Method according to at least one of the preceding claims, wherein the circuit (10) comprises several sections (22, 24, 26, 28), each section contains a conveying device comprising at least one pump (30, 32, 34, 36), and for conveying of the decontamination solution in at least one of the sections, preferably in two sections, the conveying device arranged therein is used.

13. Method according to at least one of the preceding claims, wherein required chemicals are metered into a section (22, 24, 26, 28) in which the conveying device (30, 32, 34, 36) is shut off.

**Revendications**

1. Procédé de décomposition d’une couche d’oxyde contenant des radionucléides, en particulier d’une couche d’oxyde qui est déposée sur les surfaces des composants métalliques d’un système de refroidissement d’une centrale nucléaire, comprenant au moins les étapes suivantes :

   - Traitement de la couche d’oxyde à l’aide d’une solution aqueuse contenant un agent oxydant et s’écoulant dans un circuit (10. 22, 24, 26, 28),
   - Après la décomposition de l’agent oxydant, passage de la solution via un échangeur d’anions (44) disposé dans une dérivation (42) du circuit (44) et fixation des anions et des radionucléides dans ce dernier, sachant que le circuit est traversé plusieurs fois lorsque la dérivation est ouverte,
   - Ajustage de la valeur pH de la solution s’écoulant dans le circuit au moyen d’un fournisseur de protons sous forme d’acide minéral ou d’acide méthylsulfonique en tant qu’acide organique et dosage de l’acide oxalique lorsque la dérivation est fermée,
   - Après la réaction de l’acide oxalique, passage de la solution via un échangeur de cations (46) disposé dans ladite dérivation ou dans une autre dérivation, sachant que le circuit est traversé plusieurs fois lorsque la dérivation est ouverte,
   - Décomposition oxydative de l’acide oxalique libéré par l’élimination des cations.

2. Procédé selon la revendication 1, **caractérisé en ce que** de l’acide sulfurique est utilisé comme acide minéral ou de l’acide méthylsulfonique est utilisé comme acide organique.

3. Procédé selon la revendication 1 ou 2,

**caractérisé en ce**
**que** la valeur pH est réglée sur 2 ≤ pH ≤ 7,0, en particulier 2,8 ≤ pH ≤ 4.

4. Procédé selon au moins l'une des revendications précédentes,
**caractérisé en ce**
**que** de l'acide permanganique ou un sel d'acide permanganique est utilisé comme agent oxydant.

5. Procédé selon au moins l'une des revendications précédentes,
**caractérisé en ce**
**qu'**une concentration d'acide méthylsulfonique de ≤ 500 ppm, de préférence entre 50 ppm et 100 ppm, est ajustée dans la solution aqueuse.

6. Procédé selon au moins l'une des revendications précédentes,
**caractérisé en ce**
**qu'**au moins l'acide oxalique est régénéré dans l'échangeur de cations par élimination des ions Mn-II et/ou Zn-II et/ou Fe-II et/ou Fe-III et/ou Ni-II au moyen d'une résine échangeuse d'ions.

7. Procédé selon au moins l'une des revendications précédentes,
**caractérisé en ce**
**qu'**au début du traitement de la couche d'oxyde, l'acide permanganique est ajusté à une concentration maximale de 200 ppm, de préférence ≤ 50 ppm.

8. Procédé selon au moins l'une des revendications précédentes,
**caractérisé en ce**
**que** l'acide permanganique est ajusté à une concentration de 40 - 70 ppm.

9. Procédé selon au moins l'une des revendications précédentes,
**caractérisé en ce**
**que**, au moins pendant le traitement de la couche d'oxyde avec l'agent oxydant, la solution aqueuse dans la zone des couches d'oxyde est réglée à une température comprise entre 80 °C et 120 °C, en particulier entre 85 °C et 100 °C.

10. Procédé selon au moins l'une des revendications précédentes,
**caractérisé en ce**
**que**, en cas de présence d'acide oxaylique, la solution aqueuse dans la zone des couches d'oxyde est ajustée à une température comprise entre 40 °C et 120 °C, en particulier à une température comprise entre 85 °C et 100 °C.

11. Procédé selon au moins l'une des revendications précédentes, sachant que la couche d'oxyde est déposée sur les surfaces internes d'un circuit de refroidissement (22, 24, 26, 28) d'une centrale nucléaire ou de ses composants,
**caractérisé en ce**
**que**, une fois l'agent oxydant entièrement consommé, tout en maintenant le fonctionnement selon un principe circulaire, la solution aqueuse passe par la dérivation (42) à travers l'échangeur d'anions (44) pour lier au moins le chromate présent dans la solution, que, après avoir traversé plusieurs fois le circuit raccordé à la dérivation ouverte, la dérivation est fermée et qu'ensuite l'acide oxalique est amené à la solution aqueuse, que des oxydes métalliques sont dissous en couches par l'acide oxalique, que, après la réaction de l'acide oxalique, la solution aqueuse est passée par la dérivation tout en maintenant le fonctionnement selon un principe circulaire et dans laquelle des échangeurs de cations (46) sont liés par des cations Fe et/ou Ni et/ou Zn et/ou Mn et des radionucléides se trouvant dans la solution, que l'acide oxalique libéré dans la dérivation par l'élimination des cations est au moins partiellement décomposé par oxydation dans la dérivation et que les étapes correspondantes du procédé sont répétées dans une certaine mesure, jusqu'à l'atteinte d'un degré de décontamination prédéfini.

12. Procédé selon au moins l'une des revendications précédentes,
**caractérisé en ce**
**que** le circuit (10) comprend plusieurs sections (22, 24, 26, 28), que chaque section contient au moins un dispositif de transport incluant une pompe (30, 32, 34, 36) et que le dispositif de transport agencé dans cette dernière est utilisé pour transporter la solution de décontamination, au moins dans l'une des sections, de préférence dans deux sections.

13. Procédé selon au moins l'une des revendications précédentes,

**caractérisé en ce que** les produits chimiques requis sont dosés dans une section (22, 24, 26, 28), dans laquelle le dispositif de transport (30, 32,34, 36) est désactivé.

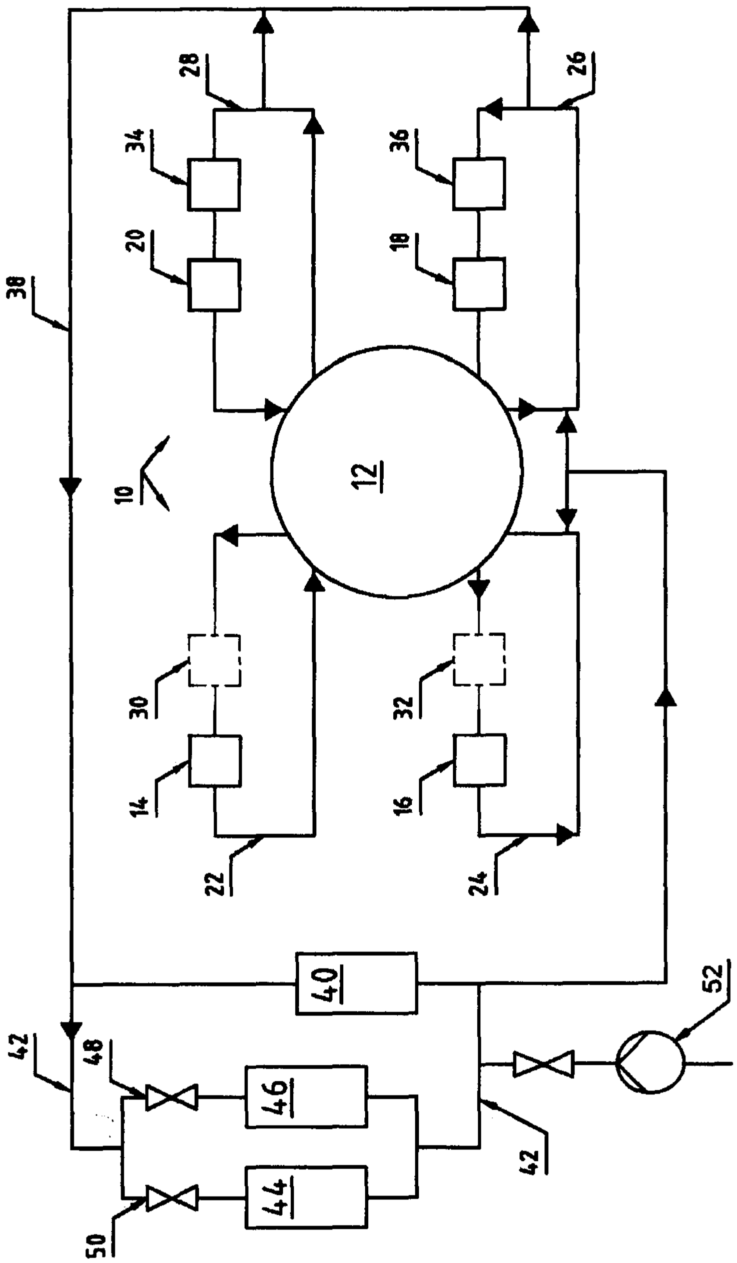
10
12
14
16
18
20
22
24
26
28
30
32
34
36
38
40
42
42
44
46
48
50
52

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007062743 A
- EP 0071336 A
- EP 0160831 B1
- EP 242449 B1
- EP 0355628 B1
- EP 0753196 B1
- EP 1082728 B1
- EP 3446316 A
- WO 2013041595 A1
- DE 102013102331 B3
- EP 2083425 A2